# EUROPÄISCHE PATENTSCHRIFT

(11) **EP 4 400 730 B1**
(45) Veröffentlichungstag und Bekanntmachung des Hinweises auf die Patenterteilung: **18.02.2026**
(21) Anmeldenummer: 23219245.0
(22) Anmeldetag: 21.12.2023
(51) Int. Cl.: F16B 5/06, F16B 2/06, F16B 2/12

(54) **KLEMME SOWIE VERFAHREN ZUM KLEMMEN EINES ZU KLEMMENDEN TEILS MIT EINER KLEMME**
CLAMP AND METHOD FOR CLAMPING A PART TO BE CLAMPED WITH A CLAMP
PINCE ET PROCÉDÉ DE SERRAGE D'UNE PIÈCE À SERRER À L'AIDE D'UNE PINCE

(30) Priorität: 10.01.2023 DE 202023100100 U
(43) Veröffentlichungstag der Anmeldung: 17.07.2024
(73) Patentinhaber: DEHN SE, 92318 Neumarkt i.d. OPf. (DE)
(72) Erfinder: Lang, Johanna, 92318 Neumarkt i.d.OPf. (DE); Lang, Tobias, 92318 Neumarkt i.d.OPf. (DE); Gross, Sebastian, 92318 Neumarkt i.d.OPf. (DE)
(74) Vertreter: Prinz & Partner mbB

(56) Entgegenhaltungen:
- EP-B1- 1 223 350
- US-A- 5 928 006
- US-A1- 2019 293 228
- US-B1- 6 533 605

## Beschreibung

Die vorliegende Erfindung betrifft eine Klemme, insbesondere eine Falzklemme oder Trägerklemme, mit einer Basis und einem Klemmteil. Zudem betrifft die Erfindung ein Verfahren zum Klemmen eines zu klemmenden Teils mit einer Klemme.

Klemmen, insbesondere Träger- oder Falzklemmen, dienen grundsätzlich dazu, Anbauteile an Trägern oder Falzverbindungen zu befestigen. Mittels einer solchen Klemme kann das Anbauteil fixiert werden, ohne dass zuvor ein Loch in den Träger oder den Falz eingebracht werden muss, was eine Beschädigung zur Folge hätte. Dementsprechend eignen sich die Klemmen besonders für die Befestigung von Anbauteilen an Dächern, um so zu verhindern, dass eine Schwachstelle in das Dach eingebracht wird. Aus diesem Grund werden auch Schneefänge, Solarpanels oder Komponenten von Blitzschutzanlagen an Dachfalzen üblicherweise mit Klemmen befestigt.

Konkret können derartige Klemmen zum Anbringen von Komponenten von Blitzschutzanlagen an einem Dachfalz oder einem Träger verwendet werden. Sie umfassen typischerweise ein Gehäuse und ein darin verschiebbar gelagertes Bauteil, das über eine Schraube positioniert werden kann, um an dem Träger oder dem Falz geklemmt werden zu können. Solche Klemmen weisen allerdings den Nachteil auf, dass die Handhabung meist schwierig ist, da das verschiebbare Bauteil aus dem Gehäuse herausrutschen kann. Zudem ist die Klemmverbindung oft nicht ausreichend stabil und kann sich während des Klemmprozesses verformen, was zur Instabilität der Klemmverbindung beiträgt.

Darüber hinaus hat sich bei den aus dem Stand der Technik bekannten Klemmen als nachteilig herausgestellt, dass eine elektrische Anbindung schwierig ist, sofern die Klemme an einem Träger oder einem Falz angebracht wird, der bzw. das einen Korrosionsschutz aufweist. In diesem Fall ist es bisher notwendig, dass der zu klemmende Bereich zuvor abgeschliffen wird, um eine elektrische Kontaktierung gewährleisten zu können. Dies erfordert also einen zusätzlichen Arbeitsschritt, wodurch die Montagekosten solcher Klemmen entsprechend hoch sind. Zudem kann zu viel vom Korrosionsschutz abgeschliffen werden, sodass es zu Korrosionsproblemen kommen kann, was ebenfalls nachteilig ist.

Aus der US 2019/293228 A1 ist eine Befestigungsbasis mit einer BasisSitzeinheit und einer Klemmeinheit bekannt. Die Basissitzeinheit umfasst einen Basissitz, der mit einer Aufnahmenut versehen ist, die Klemmeinheit umfasst ein Klemmelement und ein Schraubenelement.

Die EP 1 223 350 B1 offenbart einen Klemmhalter für plattenförmige Bauteile, mit zwei einander gegenüberliegenden Klemmschenkeln zum Einklemmen des Bauteils, wobei an den einander zugewandten Seiten der Klemmschenkel aus elastischem Material gefertigte Dichtstreifen angeordnet sind.

Die Aufgabe der Erfindung ist es, eine Klemme für einen Träger oder einen Falz bereitzustellen, die günstig in der Herstellung bzw. Montage ist und gleichzeitig eine hohe Stabilität, eine verbesserte Montagefreundlichkeit sowie einen geringen Platzbedarf aufweist.

Die Aufgabe wird erfindungsgemäß gelöst durch eine Klemme für einen Träger oder einen Falz gemäß Anspruch 1. Die Klemme hat eine Basis und ein Klemmteil, das mit der Basis gekoppelt ist, die eine Öffnung für ein bewegbares Klemmelement hat. Das Klemmteil ist im Querschnitt U-förmig ausgebildet und weist einen Anbindungsschenkel sowie einen Klemmschenkel auf. Der Anbindungsschenkel hat eine Führungsöffnung zur Führung des Klemmelements, die mit der Öffnung fluchtet. An dem Klemmschenkel ist eine Anlagefläche für ein zu klemmendes Teil vorgesehen. Die Klemme ist dazu eingerichtet, beim Klemmen eines zu klemmenden Teils eine Beschichtung des zu klemmenden Teils automatisch zu durchdringen und eine elektrisch leitende Verbindung herzustellen.

Die Aufgabe wird weiter gelöst mit einem Verfahren zum Klemmen eines zu klemmenden Teils mit einer Klemme gemäß Anspruch 14. Das Verfahren weist dabei mindestens die folgenden beiden Schritte auf. In einem ersten Schritt wird die Klemme bereitgestellt, die eine Basis und ein Klemmteil aufweist, das mit der Basis gekoppelt ist, die eine Öffnung für ein bewegbares Klemmelement hat. Das Klemmteil ist im Querschnitt U-förmig ausgebildet und weist einen Anbindungsschenkel mit einer Führungsöffnung zur Führung des Klemmelements sowie einen Klemmschenkel auf, der eine Anlagefläche für das zu klemmende Teil bereitstellt. Die Führungsöffnung fluchtet mit der Öffnung. In einem zweiten Schritt wird ein zu klemmendes Teil zwischen dem bewegbaren Klemmelement der Klemme und dem Klemmschenkel der Klemme positioniert. Anschließend wird das Klemmelement relativ zum Klemmteil und relativ zur Basis solange bewegt, bis das Klemmelement das zu klemmende Teil kontaktiert und gegen den Klemmschenkel gedrückt wird. Dabei wird insbesondere nur so viel Kraft aufgewendet und das Klemmelement so weit bewegt, bis sich die Anlagefläche zumindest teilweises in das zu klemmende Teil eindrückt und leichte Abdrücke an dem zu klemmenden Teil hinterlässt. Beim Klemmen des zu klemmenden Teils wird die Beschichtung des zu klemmenden Teils automatisch durchdringen und eine elektrisch leitende Verbindung hergestellt.

Der Grundgedanke der Erfindung ist es, ein zu klemmendes Teil mittels des Klemmteils zu klemmen, das hierfür den Klemmschenkel aufweist, der die Anlagefläche für das zu klemmende Teil bereitstellt, an der das zu klemmende Teil anliegt.

Gemäß der beanspruchten Erfindung ist vorgesehen, dass das Klemmteil eine Führungsöffnung zur Führung des bewegbaren Klemmelements aufweist, wobei die Öffnung und die Führungsöffnung miteinander fluchten. Dieser Aufbau ermöglicht eine gezielte Führung des bewegbaren Klemmelements, insbesondere einer Klemmschraube, sodass das bewegbare Klemmelement im gewünschten Winkel, insbesondere in einem rechten Winkel, auf das zu klemmende Teil trifft.

Das Klemmteil hat zudem einen Anbindungsschenkel, in dem die Führungsöffnung ausgebildet ist. Der Anbindungsschenkel kann (im Wesentlichen) parallel zum Klemmschenkel verlaufen, wodurch sichergestellt ist, dass das Klemmelement in der gewünschten Weise durch die Führungsöffnung in Bezug auf den Klemmschenkel geführt ist.

Das Klemmteil ist demnach im Querschnitt U-förmig ausgebildet. Hierdurch ergibt sich in einfacher Weise, dass der Anbindungsschenkel und der Klemmschenkel parallel zueinander ausgerichtet sind, da sie die beiden Schenkel des U-förmigen Klemmteils sind.

Die Anlagefläche kann eine Zackenstruktur aufweisen bzw. durch eine solche ausgebildet sein. Unter einer Zackenstruktur ist im Folgenden eine Struktur zu verstehen, die mindestens einen Zacken aufweist, beispielsweise in Form einer Klinge. Die Zackenstruktur kann unter anderem so ausgebildet sein, dass entweder über die gesamte Länge der Anlagefläche mehrere Zacken nebeneinander angeordnet sind, vergleichbar zu den Zähnen eines Sägeblatts, oder dass die Anlagefläche über ihre gesamte Länge einen durchgängigen Zacken mit einer Schneidkante aufweist, was auch als Klinge bezeichnet werden kann. Ist an der Anlagefläche eine Klinge vorgesehen, so ist im Querschnitt quer zur Längsrichtung ein Zacken vorgesehen, was ebenfalls eine Zackenstruktur ist. Unabhängig davon, wie die Zackenstruktur konkret ausgebildet ist, kontaktiert mindestens ein Zacken der Zackenstruktur das zu klemmende Teil, insbesondere die Spitze des mindestens einen Zackens.

Die Anlagefläche, insbesondere die Zackenstruktur, am Klemmschenkel ist der Öffnung zugewandt und bietet den Vorteil, dass die Klemme einen sicheren Halt auf das zu klemmende Teil ausübt. Die Anlagefläche, insbesondere die Zackenstruktur, verhindert, dass die Klemme und das zu klemmende Teil relativ zueinander verrutschen oder sich unter Last sogar vollständig voneinander lösen.

Insbesondere kann das zu klemmende Teil von dem bewegbaren Klemmelement gegen die Anlagefläche, insbesondere die Zackenstruktur, gedrückt werden, sodass sich die Anlagefläche, insbesondere der mindestens eine Zacken der Zackenstruktur, zumindest teilweise in das zu klemmende Teil eindrückt, also beispielsweise die Klinge. Hierdurch ergibt sich die sichere und zuverlässige Klemmung. Mit anderen Wort wird ein Form- und Reibschluss zwischen der Anlagefläche, insbesondere der Zackenstruktur, und dem zu klemmenden Teil hergestellt.

Bei dem zu klemmenden Teil handelt es sich insbesondere um einen Falz oder einen Träger. Dabei können verschiedene Träger, insbesondere U-Träger, T-Träger oder H-Träger, bzw. unterschiedliche Falze, beispielsweise ein Schnappfalz, ein Kanalfalz, ein Pittsburghfalz oder ein Stehfalz, von der Klemme geklemmt werden.

Die Basis und das Klemmteil sind separat voneinander ausgebildete Teile.

Durch die Konstruktion der erfindungsgemäßen Klemme weist diese einen besonders geringen Platzbedarf auf. Zudem besteht die Klemme aus wenigen Bauteilen, wodurch die Herstellungs- und Montagekosten gering ausfallen.

Zudem bietet die erfindungsgemäße Klemme durch ihre einfache Handhabung den Vorteil, dass sie besonders schnell und einfach an einem Falz oder Träger angebracht werden kann, wodurch die Klemme eine hohe Montagefreundlichkeit aufweist.

Ein Aspekt sieht vor, dass der Klemmschenkel in einer ersten Ebene und die Anlagefläche, insbesondere die Zackenstruktur, in einer zweiten Ebene liegen, wobei ein Winkel zwischen der ersten Ebene und der zweiten Ebene ungleich null ist. Dadurch wird sichergestellt, dass die Anlagefläche, insbesondere die Zackenstruktur, zu dem zu klemmenden Teil hin ausgerichtet ist. Dementsprechend greifen während des Klemmvorgangs der mindestens eine Zacken, insbesondere dessen Spitze, zuerst in das zu klemmende Teil, beispielsweise den Falz, ein und fixieren die Klemme bereits. So ist die Klemme schon während des Klemmvorgangs vor Verrutschen geschützt, wodurch eine präzisere Anbringung der Klemme möglich ist.

Des Weiteren kann die Anlagefläche, insbesondere die Zackenstruktur, federnd ausgebildet sein. Folglich kann die Anlagefläche, insbesondere die Zackenstruktur, während des Klemmprozesses in Richtung der ersten Ebene gedrückt werden, insbesondere von dem zu klemmenden Teil. Dadurch wird die Anlagefläche, insbesondere die Spitze(n) der Zackenstruktur, vor einer möglichen Deformation durch das zu klemmende Teil während und nach dem Klemmprozesses geschützt. Dies bietet also den Vorteil, dass die Anlagefläche, insbesondere die Zackenstruktur, in das zu klemmende Teil eingreifen kann, ohne beschädigt zu werden. Zudem kann die Klemme dadurch mehrfach wiederverwendet werden, ohne dass es zu Einbußen bei der Sicherheit und Stabilität der Klemmverbindung kommt.

Gemäß einer Ausgestaltung hat der Klemmschenkel eine Aussparung, die an die Anlagefläche, insbesondere die Zackenstruktur, angrenzt. Die Aussparung ermöglicht es in einfacher Weise, die Anlagefläche, insbesondere die Zackenstruktur, federnd auszubilden, ohne dass die mindestens eine Spitze der Anlagefläche, insbesondere der Zackenstruktur, dabei in Kontakt mit dem Klemmschenkel des Klemmteils kommt und dadurch beschädigt wird. Die Aussparung bietet nämlich den benötigten Platz für die federnde Anlagefläche, insbesondere die Zackenstruktur, da sich die Anlagefläche, insbesondere die Zackenstruktur, bei einer hergestellten Klemmverbindung in die Aussparung bewegen können, also in Richtung der ersten Ebene, die durch den Klemmschenkel definiert ist.

Auch kann die Anlagefläche, insbesondere die Zackenstruktur, so in einfacher Weise ausgebildet werden, da sie einstückig mit dem Klemmschenkel ausgebildet ist. Beispielsweise ist die Anlagefläche, insbesondere die Zackenstruktur, teilweise aus einem Bauteil ausgestanzt, aus dem der Klemmschenkel gebildet ist. Danach ist die Anlagefläche, insbesondere die Zackenstruktur, um einen von 0° verschiedenen Winkel umgebogen worden.

Grundsätzlich kann die Anlagefläche, insbesondere die Zackenstruktur, des Klemmschenkels dazu eingerichtet sein, während eines Klemmvorgangs eine Beschichtung eines zu klemmenden Teils zu durchdringen und so eine elektrisch leitende Verbindung herzustellen. Die Anlagefläche, insbesondere die Zackenstruktur, an dem Klemmschenkel hat den Vorteil, dass eine Beschichtung des zu klemmenden Teils, also eines Falzes bzw. eines Trägers, automatisch durchdrungen werden kann, wenn die Klemmverbindung hergestellt wird. Hierdurch kann eine elektrisch leitfähige Verbindung zwischen der Klemme und dem zu klemmenden Teil hergestellt werden, ohne dass das Teil zunächst abgeschliffen und anschließend wieder versiegelt werden muss. Die erfindungsgemäße Klemme ermöglicht demnach eine besonders schnelle und einfache Anbringung, wobei Korrosionsschäden langfristig vermieden werden.

Ferner kann die Öffnung eine Gewindeöffnung für das als Klemmschraube ausgebildete Klemmelement sein. Die Klemmung kann so in einfacher Weise dadurch erreicht werden, dass die Klemmschraube in die Gewindeöffnung eingeschraubt wird, wodurch sich diese relativ zur Basis bewegt und auf das zu klemmende Teil drückt, insbesondere dieses gegen den Klemmschenkel und die daran vorgesehene Anlagefläche, insbesondere die Zackenstruktur, drückt.

Grundsätzlich kann die Klemme ein bewegbares Klemmelement aufweisen, das in die Öffnung eingebracht ist, wobei über den Klemmschenkel des Klemmteils und dem bewegbaren Klemmelement eine Klemmverbindung herstellbar ist. Das zu klemmende Teil wird demnach zwischen dem bewegbaren Klemmelement und dem Klemmschenkel positioniert. Das bewegbare Klemmelement wird bewegt, um das zu klemmende Teil zu kontaktieren und gegen den Klemmschenkel zu drücken, insbesondere die am Klemmschenkel vorgesehene Anlagefläche, insbesondere Zackenstruktur. Das zu klemmende Teil liegt demnach mit einer Klemmfläche an dem Klemmschenkel an, wobei sich die Zacken bzw. die Klinge an der Anlagefläche zumindest teilweise in die Klemmfläche eindrücken. Gleichzeitig drückt das bewegbare Klemmelement von der entgegengesetzten Seite auf das zu klemmende Teil, um die Klemmung sicherzustellen. Dadurch wird das zu klemmende Teil, also der Falz oder der Träger, sicher durch die Klemme geklemmt und die Klemme vor Verrutschen gesichert. Insofern wird das zu klemmende Teil von beiden Seiten geklemmt, nämlich über das bewegbare Klemmelement, das von einer Seite auf das zu klemmende Teil drückt, und die federnd ausgebildete Anlagefläche, insbesondere Zackenstruktur, die ebenfalls eine Klemmkraft auf das zu klemmende Teil ausübt.

Das Klemmelement kann eine Ringschneide aufweisen, die dazu eingerichtet ist, eine Beschichtung eines zu klemmenden Teils zu durchdringen und eine elektrisch leitende Verbindung herzustellen. Insbesondere ist die Ringschneide an einem Ende des Klemmelements ausgebildet, insbesondere dem Ende des Klemmelements, das dem Klemmschenkel zugewandt ist, also zur Kontaktierung des zu klemmenden Teils dient. Da die Ringschneide die Beschichtung oder eine Patina des zu klemmenden Teils durchdringen kann, ist es nicht mehr nötig, einen entsprechenden Klemmbereich vor dem Anbringen der Klemme abzuschleifen.

Grundsätzlich entsteht an den Stellen, an denen die Beschichtung durch die Ringschneide des Klemmelements und/oder die Anlagefläche, insbesondere die Zackenstruktur, des Klemmschenkels entfernt wurde, auch ohne vorheriges Abschleifen eine elektrisch leitende Verbindung zwischen dem zu klemmenden Teil und dem Klemmelement bzw. dem Klemmschenkel.

Es entfällt zudem ein weiterer Arbeitsschritt, da üblicherweise die Stelle versiegelt werden musste, nachdem das zu klemmende Teil abgeschliffen und die Klemme angebracht worden ist, um das zu klemmende Teil wieder ausreichend vor Korrosion zu schützen. Eine derartige nachträgliche Versiegelung der Stelle, an der die Klemme angebracht wurde, ist bei der erfindungsgemäßen Klemme nicht mehr notwendig. Daher ist die erfindungsgemäße Klemme besonders montagefreundlich und ermöglicht eine schnellere Anbringung. Zudem ist der Korrosionsschutz weiterhin gewährleistet.

Sofern das Klemmelement als Klemmschraube ausgebildet ist, kann ein Blitzschutzdraht oder ein Verbindungselement hierfür in einfacher Weise unter einem Schraubenkopf der Klemmschraube platziert und geklemmt werden. Bereits hierdurch ergibt sich eine elektrische Anbindung an die Klemme.

Ein weiterer Aspekt sieht vor, dass das Klemmteil relativ zur Basis verschiebbar gelagert ist. Hierdurch kann die Klemme in einfacher Weise für unterschiedliche zu klemmende Teile eingestellt werden.

Eine weitere Ausführungsform sieht vor, dass die Klemme eine Leitungshalteeinrichtung aufweist, die dazu eingerichtet ist, mindestens eine Leitung zu halten. Die Leitung kann durch die Leitungshalteeinrichtung an der Klemme befestigt und geführt werden. Gleichzeitig kann so eine elektrische Anbindung erfolgen. Insofern kann eine zusätzliche Möglichkeit geschaffen werden, um eine Komponente einer Blitzschutzanlage anzubinden.

Beispielsweise weist die Basis an einer Grundfläche eine zweite Gewindeöffnung für eine Halteschraube zum Halten einer Leitung auf. Hierüber kann die Leitung gehalten werden, indem die Halteschraube angezogen wird, um eine Klemmung der Leitung zu gewährleisten.

Zwischen der Halteschraube und der Basis ist die Leitungshalteeinrichtung vorgesehen. Die Leitungshalteeinrichtung ermöglicht es, eine oder mehrere Leitungen, insbesondere einen oder mehrere Drähte oder eine oder mehrere Trennstellen einer Blitzschutzanlage, an der Klemme zu befestigen. Die Leitungshalteeinrichtung kann hierzu ein Halteteil aufweisen, das über die Halteschraube in Richtung der Basis gedrückt wird, um die mindestens eine Leitung zwischen dem Halteteil und der Basis zu halten, insbesondere der Grundfläche der Basis. Die mindestens eine Leitung kann demnach ebenfalls geklemmt werden, nämlich zwischen dem Halteteil und der Basis, insbesondere der Grundfläche der Basis.

In einer Ausführungsform weist die Basis einen Identifikationsbereich auf. Dieser Identifikationsbereich kann Kennzeichen der Klemme umfassen, wie eine Nummerierung für eine Planung oder eine Wartung. Dadurch entfällt eine zusätzliche Kennzeichnung, über ein zusätzliches Nummernschild an der Klemme, wodurch die erfindungsgemäße Klemme einen geringen Platzbedarf aufweist.

In einer Ausgestaltung umfasst der Identifikationsbereich wenigstens eine Aussparung in der Basis, in die ein separates Identifikationselement eingesetzt ist. Über den erfindungsgemäßen Identifikationsbereich kann jede Klemme mit einer eigenen, frei wählbaren Nummer versehen und gekennzeichnet werden.

In einer anderen möglichen Ausgestaltung umfasst der Identifikationsbereich eine Segmentanzeige. Über die Segmentanzeige, insbesondere eine 7-Segmentanzeige, ist es möglich, die Klemme ebenfalls mit einer eindeutigen Nummer zu versehen, wobei die Nummer flexibel eingestellt und geändert werden kann.

In einer weiteren Ausgestaltung umfasst der Identifikationsbereich eine Befestigungsstelle, an der ein Identifikationstag befestigbar ist. Ein Identifikationstag, insbesondere ein QR-Code oder ein Tag für RFID oder NFC, ermöglicht es, die Trennstellen im Rahmen der Prüfzyklen direkt in den entsprechenden Dokumentationen zu verwalten.

Beim Klemmen des zu klemmenden Teils wird eine Beschichtung des zu klemmenden Teils automatisch durchdrungen und so eine elektrisch leitende Verbindung hergestellt. Insbesondere wird die Beschichtung durch die Anlagefläche des Klemmschenkels, genauer gesagt durch die Zackenstruktur durchdrungen. Die Zackenstruktur kann einen durchgehenden Zacken, beispielsweise in Form einer Klinge, oder mehrere nebeneinander angeordnete Zacken aufweisen, deren Spitzen die Beschichtung durchdringen.

Die Beschichtung des zu klemmenden Teils wird auch noch durch das Klemmelement durchdrungen. Durch das Durchdringen der Beschichtung des zu klemmenden Teils kann eine elektrisch leitende Verbindung hergestellt werden. Das erfindungsgemäße Verfahren hat demnach den Vorteil, dass zusätzliche Arbeitsschritte eingespart werden können, da die Anlagefläche die Beschichtung des zu klemmenden Teils automatisch durchdringt und so allein durch das Klemmen eine elektrisch leitfähige Verbindung hergestellt wird.

Weitere Merkmale und Vorteile der Erfindung ergeben sich aus der nachfolgenden Beschreibung und den nachfolgenden Zeichnungen, auf die Bezug genommen wird. In den Zeichnungen zeigen:
- Figur 1 verschiedene perspektivische Ansichten einer erfindungsgemäßen Klemme gemäß einer ersten Ausführungsform;
- Figur 2 verschiedene perspektivische Ansichten einer zweiten Ausführungsform der erfindungsgemäßen Klemme, mit einer drehbar gelagerten Leitungshalteeinrichtung;
- Figur 3 verschiedene perspektivische Ansichten einer dritten Ausführungsform der erfindungsgemäßen Klemme, die zwei Leitungshalteeinrichtungen aufweist;
- Figur 4 verschiedene perspektivische Ansichten einer weiteren Ausführungsform der erfindungsgemäßen Klemme, die eine Leitungshalteeinrichtung und einen Identifikationsbereich aufweist;
- Figur 5 verschiedene perspektivische Ansichten einer fünften Ausführungsform eines erfindungsgemäßen Klemmteils;
- Figur 6 eine Draufsicht und eine Querschnittsansicht des Klemmteils der fünften Ausführungsform gemäß Figur 5;
- Figur 7 eine isometrische Ansicht und eine Draufsicht einer erfindungsgemäßen Klemme mit dem Klemmteil aus Figur 5; und
- Figur 8 eine Seitenansicht und eine Querschnittsansicht der Klemme aus Figur 7.

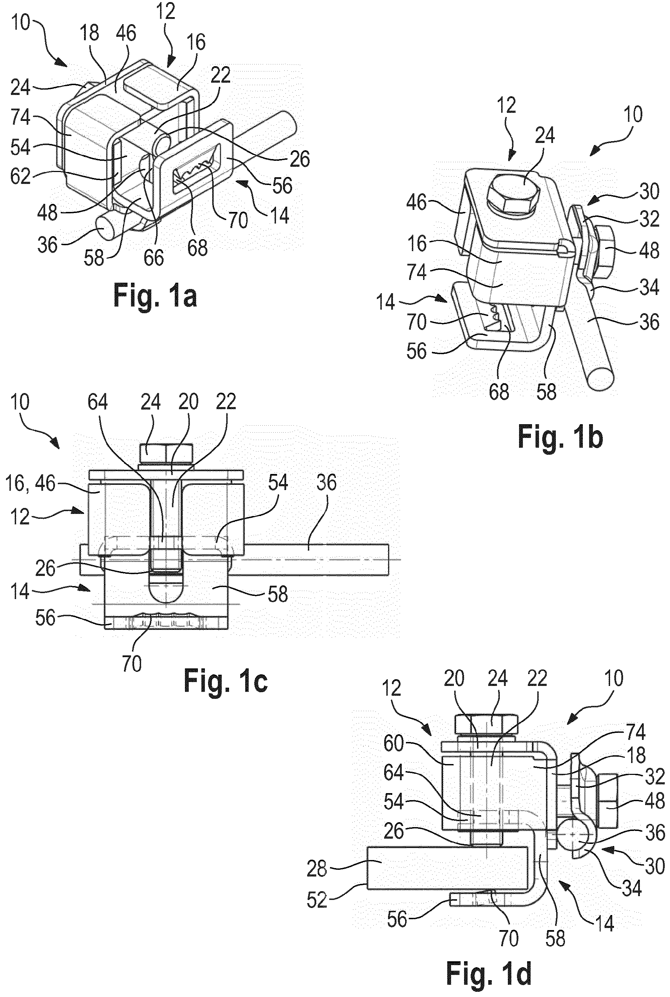

Die Figuren 1 bis 4 zeigen verschiedene Ausführungsformen einer Klemme 10 mit einer Basis 12 und einem Klemmteil 14, das zum Herstellen einer Klemmverbindung genutzt wird, wie nachfolgend noch erläutert wird.

Die Basis 12 ist im Wesentlichen quaderförmig und besitzt eine Mantelfläche 16 und eine Rückseite 18. Die Seite der Basis 12 gegenüber der Rückseite 18 ist offen.

Die Mantelfläche 16 lässt sich in vier Seitenflächen aufteilen, von denen jeweils zwei flächenmäßig gleich große Seitenflächen gegenüber voneinander angeordnet sind. Die vier Kanten der Mantelfläche 16 sind abgerundet. Von einer Seite werden die Seitenflächen der Mantelfläche 16 durch die Rückseite 18 begrenzt.

Die Rückseite 18 der Basis 12 besitzt eine Öffnung 20, die in der vorliegenden Ausführungsform als Gewindeöffnung ausgebildet ist. Die Öffnung 20 ist mittig auf der Rückseite 18 angeordnet. Durch die Öffnung 20 kann ein bewegbares Klemmelement 22 in die Basis 12 eingeführt werden, über das eine Klemmverbindung mit dem Klemmteil 14 hergestellt werden kann. Hierzu kann das bewegbare Klemmelement 22 relativ zum Klemmteil 14 bewegt werden, wie noch erläutert wird.

Insbesondere handelt es sich bei dem Klemmelement 22 um eine Klemmschraube, die demnach in die Gewindeöffnung eingeschraubt werden kann, wodurch sich die relative Bewegung des Klemmelements 22 zum Klemmteil 14 (und zur Basis 12) ergibt.

Das Klemmelement 22 besitzt an seinem einen Ende einen sechskantigen Kopf 24 mit einer ebenen Oberseite, insbesondere einen Schraubenkopf. An seinem anderen Ende ist eine Ringschneide 26 ausgebildet, die in Richtung der freien Seite der Basis 12 zeigt und zur Klemmung dient.

Mit Hilfe der Ringschneide 26 kann das Klemmelement 22 eine Beschichtung auf einer Seite eines zu klemmenden Teils 28 durchdringen und so eine elektrisch leitende Verbindung zwischen dem Klemmelement 22 und dem zu klemmenden Teil 28 herstellen. Dazu wird die Klemmschraube handfest montiert.

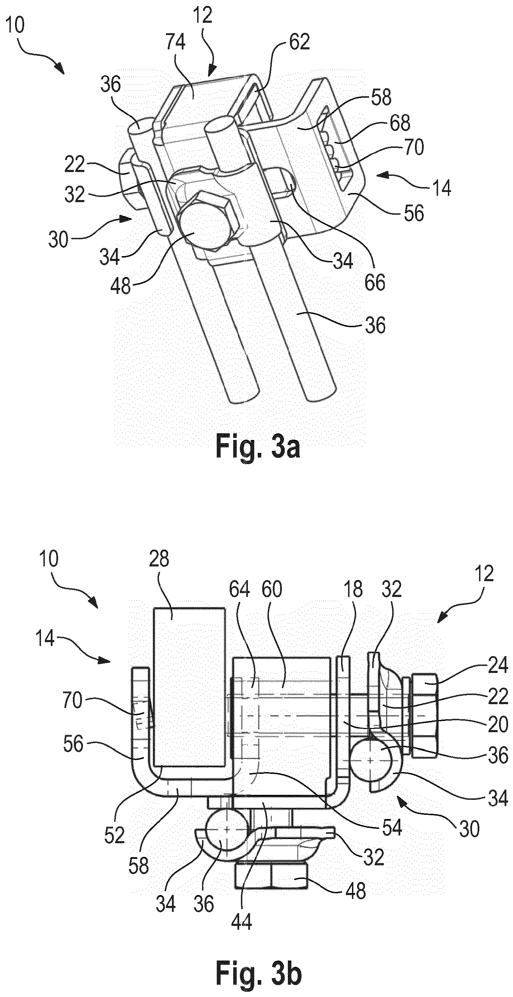

Zwischen dem Kopf 24 des Klemmelements 22 und der Rückseite 18 der Basis 12 kann eine Leitungshalteeinrichtung 30 vorgesehen sein. Die Figuren 3a und 3b, auf die nachfolgend Bezug genommen wird, zeigen eine mögliche Ausführungsform der Leitungshalteeinrichtung 30.

Die Leitungshalteeinrichtung 30 weist ein Halteteil auf, das einen ersten Abschnitt 32 und einen zweiten Abschnitt 34 umfasst.

Über den ersten Abschnitt 32 kann das Halteteil an der Rückseite 18 der Basis 12 befestigt werden. Dazu ist der erste Abschnitt 32 flach ausgebildet und parallel zur Rückseite 18 ausgerichtet. Der erste Abschnitt 32 reicht zudem nicht über die Mantelfläche 16 der Basis 12 hinaus.

Ferner weist der erste Abschnitt 32 eine Öffnung auf, durch die das Klemmelement 22 eingeführt werden kann. Der Kopf 24 liegt nach dem Einführen auf dem ersten Abschnitt 32 auf.

Der zweite Abschnitt 34 dient der Befestigung einer Leitung 36 zwischen dem Halteteil und der Basis 12. Der zweite Abschnitt 34 weist hierzu eine Krümmung zur Aufnahme der Leitung 36 auf. Demnach entspricht die Krümmung des zweiten Abschnitts 34 im Wesentlichen der Krümmung der zu befestigenden Leitung 36, wie insbesondere aus Figur 3b hervorgeht.

Das Halteteil der Leitungshalteeinrichtung 30 wird über den ersten Abschnitt 32 und das Klemmelement 22 an der Basis 12 befestigt. Dabei wird die Leitung 36 fest zwischen dem zweiten Abschnitt 34 und der Rückseite 18 der Basis 12 fixiert. Die Leitung 36 ist in dieser Ausführungsform parallel zu dem zu befestigenden Teil 28 angeordnet und liegt auf der Mantelfläche 16 auf.

Es ist auch möglich, dass die Leitungshalteeinrichtung 30 mehr als eine Leitung 36 an der Klemme 10 fixiert. Hierzu können die Leitungshalteeinrichtungen 30 unter anderem zwei oder mehr zweite Abschnitte 34 mit entsprechenden Krümmungen aufweisen.

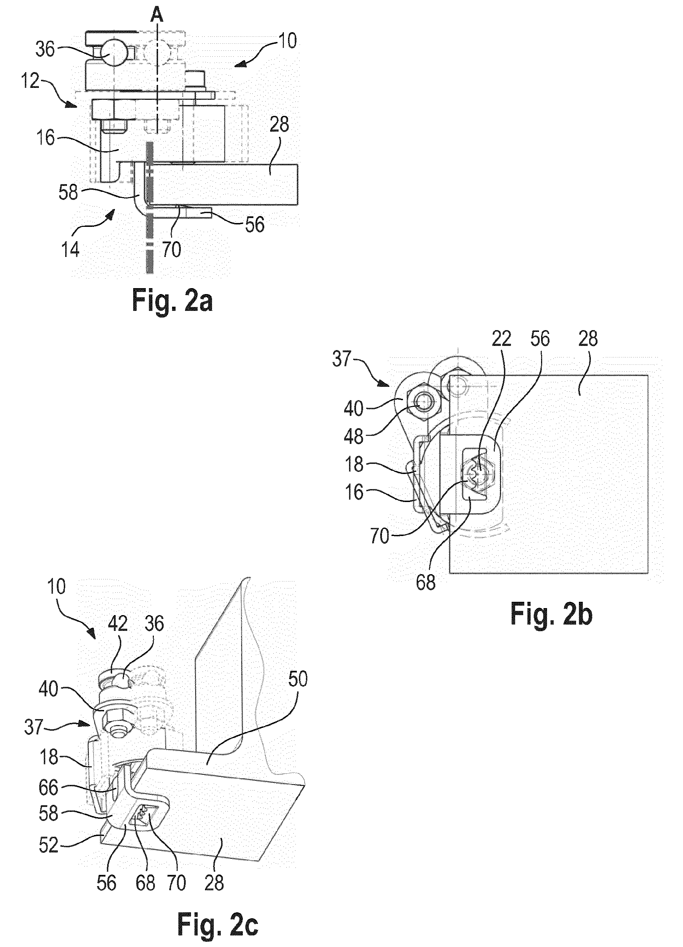

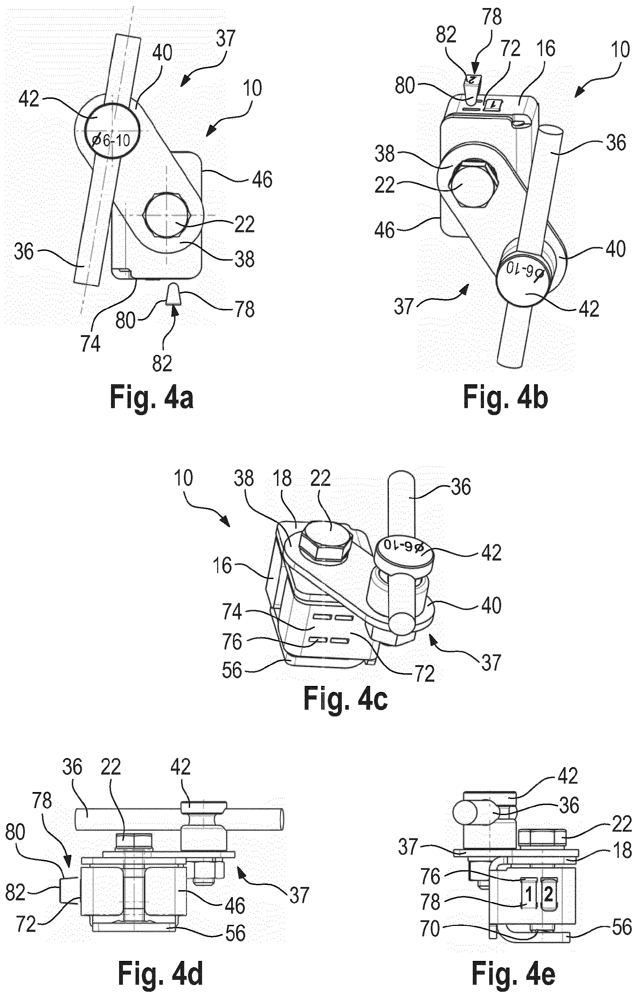

In den Figuren 2a bis 2c sowie den Figuren 4a bis 4e sind alternative Ausführungsform der Leitungshalteeinrichtung 30 gezeigt, die ein Verbindungsteil 37 aufweisen.

Das Verbindungsteil 37 weist eine längliche Form auf und besitzt ein erstes Abschnittsende 38 und ein zweites Abschnittsende 40. Das Verbindungsteil 37 ist flach ausgebildet und beispielsweise parallel zur Rückseite 18 der Basis 12 angeordnet ist.

Das zweite Abschnittsende 40 des Verbindungsteils 37 reicht über die Basis 12 hinaus.

Das Verbindungsteil 37 weist eine Öffnung an seinem ersten Abschnittsende 38 auf, durch das sich das Klemmelement 22 erstreckt, um das Verbindungsteil 37 mit der Rückseite 18 der Basis 12 zu verbinden.

An dem zweiten Abschnittsende 40 des Verbindungsteils 37 befindet sich eine Schraubklemmverbindung 42, über die die Leitung 36 gehalten werden kann. Die Leitung 36 wird dabei nur von der Schraubklemmverbindung 42 kontaktiert und fixiert.

Es ist möglich, dass über die Schraubklemmverbindung 42 auch mehr als eine Leitung 36 fixiert werden kann.

Der Winkel, der zwischen der Achse, die vom ersten Abschnittsende 38 zum zweiten Abschnittsende 40 verläuft, und der Leitung 36 kann während der Montage beliebig eingestellt werden, wie insbesondere aus den Figuren 2 bis 2c hervorgeht, in denen jeweils zwei unterschiedliche Stellungen gezeigt sind.

Wie die Ausführungsformen in den Figuren 1 bis 4 zeigen, weist die Basis 12 zudem eine zweite Gewindeöffnung 44 in der Mantelfläche 16 auf.

Die zweite Gewindeöffnung 44 befindet sich auf einer der beiden flächenmäßig großen Seitenflächen 46 der Mantelfläche 16.

Über die zweite Gewindeöffnung 44 kann eine Halteschraube 48 eingebracht werden.

Die Länge der Halteschraube 48 und/oder die Position der zweiten Gewindeöffnung 44 sind bzw. ist so gewählt, dass die Halteschraube 48 das Klemmelement 22 nicht kontaktiert.

Über die Halteschraube 48 kann eine (weitere) Leitungshalteeinrichtung 30 an der Mantelfläche 16 der Basis 12 angebracht werden, wie insbesondere aus den Figuren 3a bis 3b deutlich wird. Die Halteschraube wird dazu handfest montiert.

Die Basis 12 kann demnach eine oder zwei oder noch mehr Leitungshalteeinrichtungen 30 aufweisen. Dadurch ist es möglich, mehrere Leitungen 36 gleichzeitig an dem zu klemmenden Teil 28 zu befestigen, insbesondere in unterschiedlichen Orientierungen.

In den Figuren 3a und 3b sind über die beiden Leitungshalteeinrichtungen 30 eine erste Leitung 36 parallel zu einer Längsseite 50 des zu klemmenden Teils 28 und eine zweite Leitung 36 parallel zu einer Oberseite 52 des zu klemmenden Teils 28 gehalten und geführt.

Wie vorstehend schon erläutert, weist die Klemme 10 das Klemmteil 14 auf, das in der gezeigten Ausführungsform einen U-förmigen Querschnitt hat und mit der Basis 12 gekoppelt ist.

Beispielsweise ist das Klemmteil 14 in der Basis 12 verschiebbar gelagert, sodass die relative Position des Klemmteils 14 in Bezug auf die Basis 12 einstellbar ist. Hierdurch kann eine Anpassung an das zu klemmende Teil 28 erfolgen.

Das Klemmteil 14 umfasst einen Anbindungsschenkel 54 und einen Klemmschenkel 56, die über ein Mittelstück 58 miteinander verbunden sind. Der Anbindungsschenkel 54 und der Klemmschenkel 56 stellen demnach die beiden Schenkel des U-förmigen Klemmteils 14 dar, weswegen der Anbindungsschenkel 54 und der Klemmschenkel 56 parallel zueinander ausgerichtet sind. Das Klemmteil 14 weist abgerundete Kanten zwischen dem Anbindungsschenkel 54, dem Mittelstück 58 und dem Klemmschenkel 56 auf.

Der Anbindungsschenkel 54 ist in einem, durch die Mantelfläche 16 und die Rückseite 18 gebildeten Hohlraum 60 innerhalb der Basis 12 vorgesehen. Der Anbindungsschenkel 54 ist parallel zur Rückseite 18 ausgerichtet und kann im Inneren des Hohlraums 60 parallel zur Rückseite 18 verschoben werden.

Zwei an der Basis 12 angebrachte Sicherungen 62 verhindern zudem ein unbeabsichtigtes Entfernen des Anbindungsschenkels 54 aus dem Hohlraum. Insofern ist das gesamte Klemmteil 14 verliersicher in der Basis 12 aufgenommen. Die Sicherungen 62 können durch innenseitige Vorsprünge ausgebildet ist.

Der Anbindungsschenkel 54 weist eine Führungsöffnung 64 auf, die mit der Öffnung 20 fluchtet. Die Führungsöffnung 64 dient der Führung des Klemmelements 22 innerhalb der Klemme 10.

Ferner weist das Klemmteil 14 ein Langloch 66 auf. Das Langloch 66 befindet sich auf der Seite des Klemmteils 14, die der Halteschraube 48 zugewandt ist, also dem Mittelstück 58. Die Position der Halteschraube 48 kann hierüber flexibel eingestellt werden. Die Breite des Langlochs 66 entspricht mindestens dem Durchmesser der Halteschraube 48.

Durch das Langloch 66 kann es zudem möglich sein, dass das Klemmteil 14 im Hohlraum 60 verschoben werden kann, ohne von der Halteschraube 48, die ebenfalls in den Hohlraum 60 hineinreicht, blockiert zu werden. Insofern kann das Langloch 66 dazu dienen, das Klemmteil 14 relativ zur Basis 12 zu positionieren.

Der Klemmschenkel 56 ist parallel zur Rückseite 18 der Basis 12 angeordnet und nicht im Hohlraum 60 vorgesehen.

Der Klemmschenkel 56 bildet zusammen mit dem Klemmelement 22 die Klemmverbindung, durch die das zu klemmende Teil 28 eingeklemmt werden kann und die Klemme 10 an dem zu klemmenden Teil 28 fixiert werden kann.

Die Länge des Klemmelements 22 kann sich nach der Dicke des zu klemmenden Teils 28 richten und, sofern gewünscht, individuell angepasst werden. Wichtig ist, dass das zu klemmende Teil 28 nach dem Klemmen in Kontakt mit dem Klemmelement 22 auf der einen Seite und dem Klemmschenkel 56 auf der anderen Seite steht. Es ist aber nicht zwingend notwendig, dass das Klemmelement 22 vollständig in die Öffnung 20 eingebracht wird. Insofern kann das Klemmelement 22 auch etwas über die Seite überstehen, an der die Öffnung 20 vorgesehen ist.

Der Klemmschenkel 56 weist zudem eine Aussparung 68 sowie eine Anlagefläche 70 auf, die an die Aussparung 68 angrenzt.

In den Figuren 2 bis 4 ist die Anlagefläche als Zackenstruktur mit mehreren, nebeneinander angeordneten Zacken ausgebildet, sodass sie aussieht wie ein Sägeblatt. Die Anlagefläche 70 weist somit keine durchgehende Kante auf, an der das zu klemmende Teil 28 anliegt, sondern wird durch mehrere Zacken definiert, wobei das zu klemmende Teil 28 somit nur von den Zacken kontaktiert wird, insbesondere den Spitzen der Zacken.

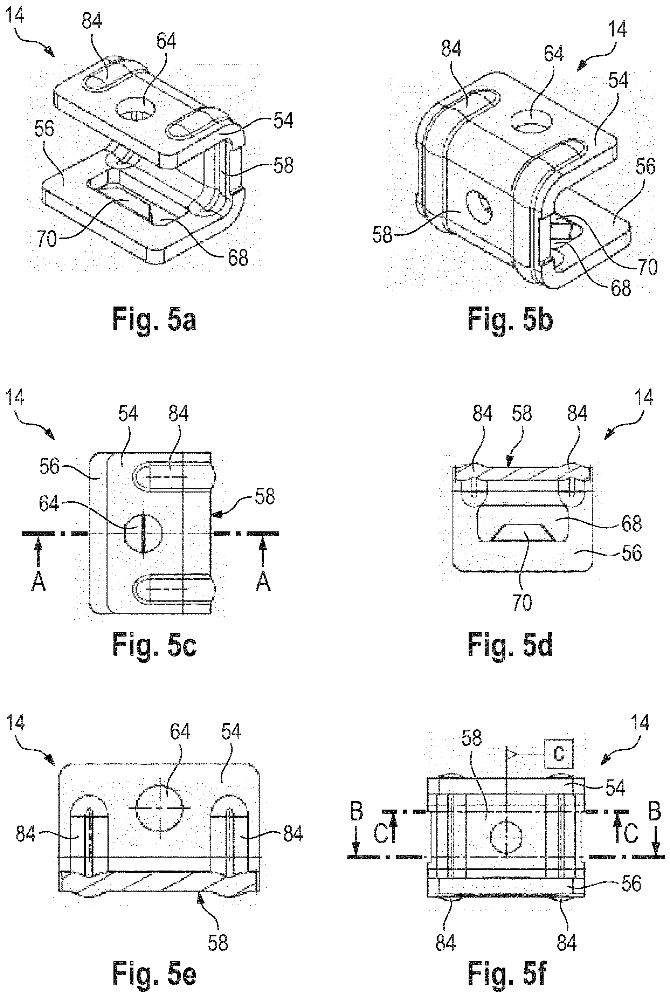

In den Figuren 5 bis 8 ist die Anlagefläche 70 als Zackenstruktur in Form einer durchgängigen Klinge ausgebildet, die eine Schneidkante aufweist. Die Anlagefläche 70 ist im Querschnitt als ein (durchgängiger) Zacken ausgebildet, wobei die Spitze des Zackens die Schneidkante bildet. Mit dieser Schneidkante, also der durchgängigen Spitze, liegt die Anlagefläche 70 an dem zu klemmenden Teil 28 an.

Durch den Klemmschenkel 56 wird eine erste Ebene definiert, wohingegen die Spitze(n) der Zackenstruktur der Anlagefläche 70 in einer zweiten Ebene liegen, die zur ersten Ebene verschieden ist, sodass die Spitze(n) der Zackenstruktur der Anlagefläche 70 aus der ersten Ebene heraussteht, in der der Klemmschenkel 56 liegt. Der Winkel zwischen den beiden Ebenen ist demnach nicht null, sodass die Spitzen der Zackenstruktur der Anlagefläche 70 in Richtung des Anbindungsschenkels 54 bzw. des zu klemmenden Teils 28 zeigen. Die Spitzen der Zackenstruktur der Anlagefläche 70 sind somit dem zu klemmenden Teil 28 zugewandt bzw. diesem entgegengerichtet.

Dementsprechend wird während des Klemmens des zu klemmenden Teils 28 zwischen dem Klemmelement 22 und dem Klemmschenkel 56 sichergestellt, dass die Anlagefläche 70 das zu klemmende Teil 28 kontaktiert, insbesondere die Spitze(n) der Zackenstruktur der Anlagefläche 70 teilweise in das zu klemmende Teil 28 eingreift bzw. eingreifen.

Die Anlagefläche 70 ist federnd am Klemmschenkel 56 ausgebildet, insbesondere die Spitze(n) der Zackenstruktur der Anlagefläche 70. Während des Klemmens ist es demnach möglich, dass die Anlagefläche 70, insbesondere die Spitze(n) der Zackenstruktur der Anlagefläche 70, aufgrund des zu klemmenden Teils 28 in Richtung der ersten Ebene gedrückt wird, ohne dass es zu Beschädigungen während des Klemmprozesses kommt, beispielsweise unerwünschte Verformungen der Spitze(n) der Zackenstruktur der Anlagefläche 70.

Durch die Neigung der Anlagefläche 70, insbesondere der Spitze(n) der Zackenstruktur der Anlagefläche 70, wird während des Klemmprozesses zudem eine Beschichtung des zu klemmenden Teils 28 automatisch teilweise entfernt. Dadurch wird ein Kontakt zwischen dem Grundmaterial des zu klemmenden Teils 28 und der Anlagefläche 70 der Klemme 10 hergestellt.

Insofern wird also eine elektrisch leitende Verbindung zwischen der Anlagefläche 70 des Klemmteils 14 und dem zu klemmenden Teil 28 hergestellt, worüber die Leitung 36 geerdet werden kann.

Die Beschichtung des zu klemmenden Teils 28 ist nach dem Befestigen der Klemme 10 auf beiden Seiten teilweise unterbrochen, nämlich durch das Klemmelement 22, das die Ringschneide 26 hat, und die Anlagefläche 70, insbesondere die Spitze(n) der Zackenstruktur der Anlagefläche 70, des Klemmteils 14, sodass das zu klemmende Teil 28 an beiden Seiten elektrisch kontaktiert wird.

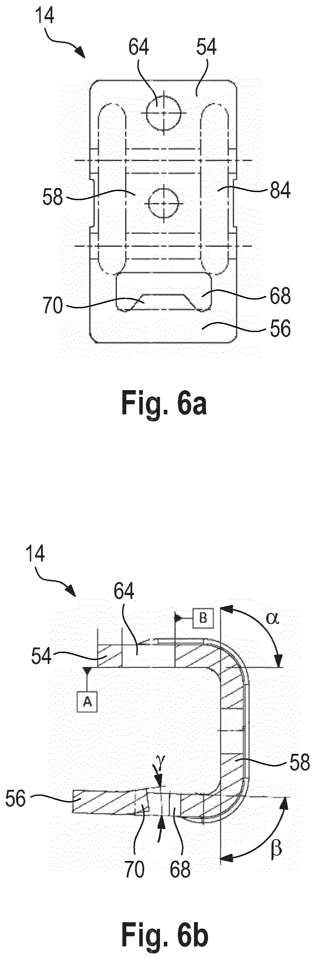

Wie vorstehend schon erläutert, ist die Zackenstruktur der Anlagefläche 70 in der Ausführungsform gemäß den Figuren 5 und 6 als eine durchgehende Klinge ausgebildet.

Die als Klinge ausgebildete Zackenstruktur unterscheidet sich von einer Zackenstruktur, die aus mehreren, nebeneinander angeordneten Zacken besteht, dahingehend, dass die als Klinge ausgebildete Zackenstruktur eine durchgehende bzw. ununterbrochene Kante aufweist, die auch als Schneidkante bezeichnet werden kann, wohingegen die mehreren, nebeneinander angeordneten Zacken mehrere nebeneinander angeordnete Spitzen aufweisen, sodass keine durchgehende bzw. ununterbrochene Kante vorliegt. An dem zu klemmenden Teil 28 liegt die Schneidkante, also die Spitze des einen Zackens, vollständig an, sodass die Beschichtung des zu klemmenden Teils 28 über die gesamte Länge der Anlagefläche 70 entfernt wird. Dagegen wird bei einer Anlagefläche 70, die mehrere nebeneinander angeordnete Zacken aufweist, die Beschichtung des zu klemmenden Teils 28 nur punktuell entfernt, nämlich im Bereich der separaten Spitzen der mehreren Zacken.

Somit entsteht bei einer als Klinge mit einer Schneidkante ausgebildeten Anlagefläche 70 keine punktuelle Belastung des zu klemmenden Teils 28, sondern eine gleichmäßige Belastung und Klemmung über die gesamte Länge der Schneidkante.

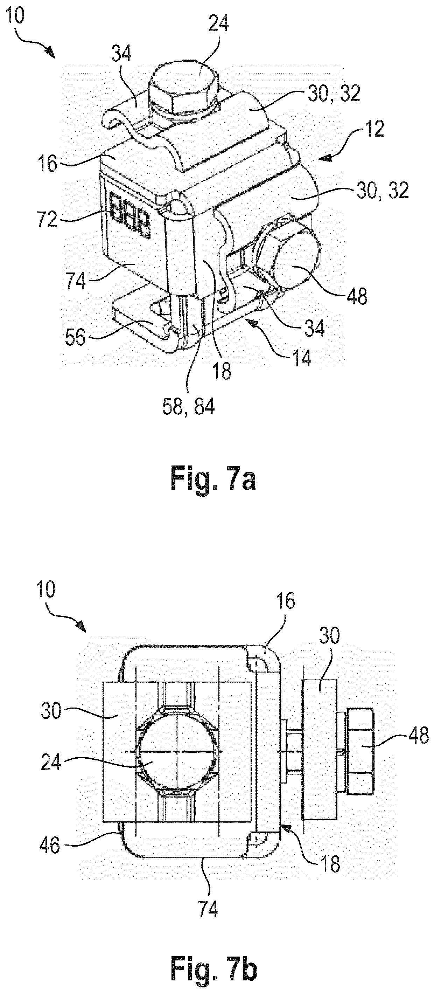

Wie unter anderem in den Figuren 4a bis 4e sowie in den Figuren 7a und 7b gezeigt ist, kann die Klemme 10 einen Identifikationsbereich 72 aufweisen.

Der Identifikationsbereich 72 befindet sich auf einer der beiden flächenmäßig kleinen Seitenflächen 74 der Mantelfläche 16 der Klemme 10.

Der Identifikationsbereich 72 weist beispielsweise vier schlitzförmige Aussparungen 76 auf, wobei zwei schlitzförmige Aussparungen 76 parallel zueinander angeordnet sind, also paarweise, wie dies in den Figuren 4a bis 4e gezeigt ist. Ein Paar an schlitzförmigen Aussparungen 76 dient dazu, ein Identifikationselement 78 aufzunehmen.

Das Identifikationselement 78 weist die Form einer eckigen Klammer auf, wobei die beiden Schenkel 80 in die schlitzförmigen Aussparungen 78 eingesetzt werden können.

Der Klammerteil 82 ist zwischen den beiden Schenkeln 80 angeordnet und als eine ebene Fläche ausgebildet. Der Klammerteil 82 weist zudem eine Beschriftung auf. Die Beschriftung kann aus ein oder mehreren Buchstaben oder Zahlen oder einer Buchstaben-Zahlen-Kombination bestehen.

Der Identifikationsbereich 72 kann anstelle der eingesetzten Identifikationselemente 78 auch eine Segmentanzeige wie beispielsweise eine 7-Segmentanzeige aufweisen.

Über die Segmentanzeige kann die Klemme 10 ebenfalls nummeriert oder anderweitig gekennzeichnet werden.

Der Identifikationsbereich 72 kann auch eine Befestigungsstelle für einen Identifikationstag aufweisen, um die Klemme 10 und darüber auch die Trennstelle der Blitzschutzanlage zu kennzeichnen oder nummerieren. Mögliche Identifikationstags sind beispielsweise ein QR-Code, oder ein Tag für NFC oder RFID sein.

Über die Kennzeichnung mittels eines Identifikationstags ist es möglich, die Trennstelle im Rahmen einer Prüfung entsprechend der Vorgaben einer Norm direkt in der entsprechenden Dokumentation zu verwalten.

Aus den Figuren 5 und 6 geht zudem hervor, dass das Klemmteil 14 zwei parallel zueinander verlaufende Erhöhungen 84 aufweist. Diese erstrecken sich von dem Anbindungsschenkel 53 über das Mittelteil 58 bis in den Klemmschenkel 56 und dienen unter anderem der Führung des Klemmteils 14 in der Basis 12.

Wie aus der Figur 6a hervorgeht, wird das erfindungsgemäße Klemmteil 14 aus einem im Wesentlichen ebenen Klemmteilrohling 86 hergestellt, indem dieser an zwei Achsen umgeformt wird, insbesondere gebogen wird, sodass ein U-förmiges Klemmteil 14 entsteht.

Der Klemmteilrohling 86 weist vor dem Biegen bereits die Anlagefläche 70, die Aussparung 68 sowie die Erhöhungen 84 und die Führungsöffnung 64 auf. Darüber hinaus weist dar Klemmteilrohling 86 eine mittig angeordnete kreisförmige Öffnung auf, die im zusammengesetzten Zustand mit der zweiten Gewindeöffnung fluchtet.

Nach dem Verformen bzw. Biegen des Klemmteilrohlings 86 entsteht das Klemmteil 14, wie es in Figur 6b dargestellt ist.

Der Winkel α, den der Anbindungsschenkel 54 und das Mittelteil 58 einschließen beträgt (im Wesentlichen) 90°. Der Winkel β zwischen dem Mittelteil 58 und dem Klemmschenkel 56 ist etwas geringer als der Winkel α. Insbesondere beträgt der Winkel β (im Wesentlichen) 88°.

Die als Klinge ausgebildete Anlagefläche 70 ist ebenfalls federnd ausgebildet und weist dabei einen Neigungswinkel γ in Richtung des Inneren des Klemmteils 14 von 2° bis 20° auf, beispielsweise (im Wesentlichen) 10°.

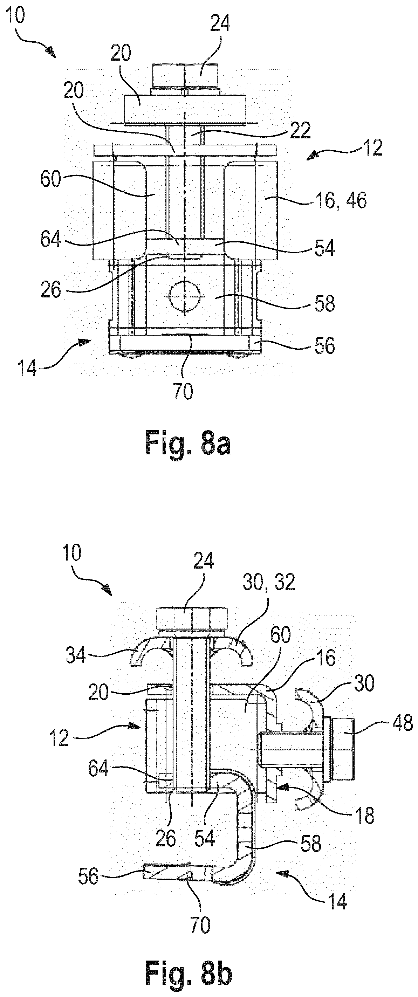

Eine Klemme 10 mit einer Basis 12 und einem Klemmteil 14, wie es in den Figuren 5 und 6 gezeigt ist, geht aus den Figuren 7 und 8 hervor.

Die Basis 12 entspricht dabei der Basis 12, wie sie auch in den Figuren 1 bis 4 dargestellt ist, und dient der Aufnahme des Klemmteils 14 sowie der Führung des Klemmelements 22 und gegebenenfalls der Aufnahme der Halteschraube 48.

An der Basis 12 können über das Klemmelement 22 und ggf. die Halteschraube 48 ein bzw. zwei Leitungshalteeinrichtungen 30 angebracht sein, mit denen bis zu zwei Leitungen pro Leitungshalteeinrichtung 30 an der Basis 12 angebracht werden können.

Dazu weist, wie in den Figuren 7a und 8a gezeigt ist, jede Leitungshalteeinrichtung 30 einen ersten Abschnitt 32 und einen zweiten Abschnitt 34 auf, wobei beide Abschnitte so geformt sind, insbesondere gebogen sind, dass mit einer Leitungshalteeinrichtung 30 zwei Leitungen (nicht gezeigt) an der Klemme 10 befestigt werden können.

Mit allen dargestellten Klemmen 10 lässt sich das zu klemmende Teil 28 einfach und sicher klemmen. Hierzu wird zunächst das klemmende Teil 28 zwischen dem bewegbaren Klemmelement 22 der Klemme 10 und dem Klemmschenkel 58 der Klemme 10 positioniert. Anschließend wird das Klemmteil 22 solange bewegt, bis das Klemmelement 22 das zu klemmende Teil 28 kontaktiert und gegen den Klemmschenkel 56 drückt, sodass sich die Anlagefläche 70 zumindest teilweises in das zu klemmende Teil 28 eindrückt, insbesondere die wenigstens eine Spitze der Zackenstruktur der Anlagefläche 70.

Dies stellt unter anderem sicher, dass eine eventuell am zu klemmenden Teil 28 vorhandene Beschichtung automatisch durchdrungen bzw. entfernt wird, also von der wenigstens eine Spitze der Zackenstruktur der Anlagefläche 70. Dies stellt ferner sicher, dass automatisch eine elektrisch leitende Verbindung hergestellt wird.

## Patentansprüche

1. Klemme (10) für einen Träger oder einen Falz, mit einer Basis (12) und einem Klemmteil (14), das mit der Basis (12) gekoppelt ist, die eine Öffnung (20) für ein bewegbares Klemmelement (22) hat, wobei das Klemmteil (14) im Querschnitt U-förmig ausgebildet ist und einen Anbindungsschenkel (54) sowie einen Klemmschenkel (56) aufweist, wobei der Anbindungsschenkel (54) eine Führungsöffnung (64) zur Führung des Klemmelements (22) innerhalb der Klemme (10) aufweist, wobei die Führungsöffnung (64) mit der Öffnung (20) fluchtet, und wobei der Klemmschenkel (56) eine Anlagefläche (70) für ein zu klemmendes Teil (28) bereitstellt, **dadurch gekennzeichnet, dass** die Klemme (10) eingerichtet ist, beim Klemmen eines zu klemmenden Teils (28) eine Beschichtung des zu klemmenden Teils (28) automatisch zu durchdringen und eine elektrisch leitende Verbindung herzustellen.

2. Klemme (10) nach Anspruch 1, **dadurch gekennzeichnet, dass** der Klemmschenkel (56) in einer ersten Ebene liegt und die Anlagefläche (70) in einer zweiten Ebene liegt, wobei ein Winkel zwischen der ersten Ebene und der zweiten Ebene ungleich null ist.

3. Klemme (10) nach Anspruch 1 oder 2, **dadurch gekennzeichnet, dass** die Anlagefläche (70) federnd ausgebildet ist.

4. Klemme (10) nach einem der vorhergehenden Ansprüche, **dadurch gekennzeichnet, dass** der Klemmschenkel (56) eine Aussparung (68) hat, die an die Anlagefläche (70) angrenzt.

5. Klemme (10) nach einem der vorhergehenden Ansprüche, **dadurch gekennzeichnet, dass** die Anlagefläche (70) des Klemmschenkels (56) dazu eingerichtet ist, während eines Klemmvorgangs die Beschichtung des zu klemmenden Teils (28) zu durchdringen und so die elektrisch leitende Verbindung herzustellen.

6. Klemme (10) nach einem der vorhergehenden Ansprüche, **dadurch gekennzeichnet, dass** die Klemme (10) ein bewegbares Klemmelement (22) aufweist, das in die Öffnung (20) eingebracht ist, wobei über den Klemmschenkel (56) des Klemmteils (14) und dem bewegbaren Klemmelement (22) eine Klemmverbindung herstellbar ist, insbesondere wobei die Öffnung (20) eine Gewindeöffnung für das als Klemmschraube ausgebildete Klemmelement (22) ist.

7. Klemme (10) nach Anspruch 6, **dadurch gekennzeichnet, dass** das Klemmelement (22) eine Ringschneide (26) aufweist, die dazu eingerichtet ist, die Beschichtung des zu klemmenden Teils (28) zu durchringen und die elektrisch leitende Verbindung herzustellen.

8. Klemme (10) nach einem der vorhergehenden Ansprüche, **dadurch gekennzeichnet, dass** das Klemmteil (14) relativ zur Basis (12) verschiebbar gelagert ist.

9. Klemme (10) nach einem der vorhergehenden Ansprüche, **dadurch gekennzeichnet, dass** die Klemme (10) eine Leitungshalteeinrichtung (30) umfasst, die dazu eingerichtet ist, mindestens eine Leitung (36) zu halten.

10. Klemme (10) nach einem der vorhergehenden Ansprüche, **dadurch gekennzeichnet, dass** die Basis (12) an einer Grundfläche eine zweite Gewindeöffnung (44) für eine Halteschraube (48) zum Halten einer Leitung (36) aufweist.

11. Klemme (10) nach Anspruch 9 und Anspruch 10, **dadurch gekennzeichnet, dass** zwischen der Halteschraube (48) und der Basis (12) die Leitungshalteeinrichtung (30) vorgesehen ist.

12. Klemme (10) nach einem der vorhergehenden Ansprüche, **dadurch gekennzeichnet, dass** die Basis (12) einen Identifikationsbereich (72) aufweist.

13. Klemme (10) nach Anspruch 12, **dadurch gekennzeichnet, dass** der Identifikationsbereich (72) wenigstens eine Aussparung (76) in der Basis (12) umfasst, in die ein separates Identifikationselement (78) eingesetzt ist, und/oder wobei der Identifikationsbereich (72) eine Segmentanzeige umfasst und/oder der Identifikationsbereich (72) eine Befestigungsstelle umfasst, an der ein Identifikationstag befestigbar ist.

14. Verfahren zum Klemmen eines zu klemmenden Teils (28) mit einer Klemme (10), wobei das Verfahren die folgenden Schritte aufweist:
a) Bereitstellen der Klemme (10), die eine Basis (12) und ein Klemmteil (14) aufweist, das mit der Basis (12) gekoppelt ist, die eine Öffnung (20) für ein bewegbares Klemmelement (22) hat, wobei das Klemmteil (14) im Querschnitt U-förmig ausgebildet ist und einen Anbindungsschenkel (54) mit einer Führungsöffnung (64) zur Führung des Klemmelements (22) sowie einen Klemmschenkel (56) aufweist, der eine Anlagefläche (70) für das zu klemmende Teil (28) bereitstellt, wobei die Führungsöffnung (64) mit der Öffnung (20) fluchtet,
b) Positionieren des zu klemmenden Teils (28) zwischen dem bewegbaren Klemmelement (22) der Klemme (10) und dem Klemmschenkel (56) der Klemme (10);
c) Bewegen des Klemmelements (22) relativ zum Klemmteil (14) und relativ zur Basis (12) solange, bis das Klemmelement (22) das zu klemmende Teil (28) kontaktiert und gegen den Klemmschenkel (56) drückt, sodass sich die Anlagefläche (70) zumindest teilweise in das zu klemmende Teil (28) eindrückt,
**dadurch gekennzeichnet, dass** beim Klemmen des zu klemmenden Teils (28) eine Beschichtung des zu klemmenden Teils (28) automatisch durchdrungen wird und eine elektrisch leitende Verbindung hergestellt wird.

15. Verfahren nach Anspruch 14, **dadurch gekennzeichnet, dass** die Beschichtung durch die Anlagefläche (70) des Klemmschenkels (56) und durch das Klemmelement (22) durchdrungen wird.

## Claims

1. A clamp (10) for a carrier or a fold, comprising a base (12) and a clamping part (14) which is coupled to the base (12), which has an opening (20) for a movable clamping element (22), wherein the clamping part (14) is U-shaped in cross-section and has a connecting leg (54) and a clamping leg (56), wherein the connecting leg (54) has a guide opening (64) for guiding the clamping element (22) within the clamp (10), wherein the guide opening (64) is aligned with the opening (20), and wherein the clamping leg (56) provides a contact surface (70) for a part (28) to be clamped, **characterized in that** when clamping a part (28) to be clamped, the clamp (10) is designed to automatically penetrate a coating of the part (28) to be clamped and to establish an electrically conductive connection.

2. The clamp (10) according to claim 1, **characterized in that** the clamping leg (56) is situated in a first plane and the contact surface (70) is situated in a second plane, wherein an angle between the first plane and the second plane is unequal to zero.

3. The clamp (10) according to claim 1 or 2, **characterized in that** the contact surface (70) is designed to be resilient.

4. The clamp (10) according to any of the preceding claims, **characterized in that** the clamping leg (56) has a recess (68) that is adjacent to the contact surface (70).

5. The clamp (10) according to any of the preceding claims, **characterized in that** the contact surface (70) of the clamping leg (56) is designed to penetrate the coating of the part (28) to be clamped during a clamping process and thus to establish the electrically conductive connection.

6. The clamp (10) according to any of the preceding claims, **characterized in that** the clamp (10) has a movable clamping element (22) which is introduced in the opening (20), wherein a clamping connection can be established by means of the clamping leg (56) of the clamping part (14) and the movable clamping element (22), in particular wherein the opening (20) is a threaded opening for the clamping element (22) designed as a clamping screw.

7. The clamp (10) according to claim 6, **characterized in that** the clamping element (22) has an annular cutting edge (26) which is designed to penetrate the coating of the part (28) to be clamped and to establish the electrically conductive connection.

8. The clamp (10) according to any of the preceding claims, **characterized in that** the clamping part (14) is mounted so as to be displaceable relative to the base (12).

9. The clamp (10) according to any of the preceding claims, **characterized in that** the clamp (10) comprises a cable holding means (30) which is adapted to hold at least one cable (36).

10. The clamp (10) according to any of the preceding claims, **characterized in that** the base (12) has a second threaded opening (44) on a base surface for a retaining screw (48) for holding a cable (36).

11. The clamp (10) according to claim 9 and claim 10, **characterized in that** the cable retaining means (30) is provided between the retaining screw (48) and the base (12).

12. The clamp (10) according to any of the preceding claims, **characterized in that** the base (12) has an identification area (72).

13. The clamp (10) according to claim 12, **characterized in that** the identification area (72) comprises at least one recess (76) in the base (12) in which a separate identification element (78) is inserted, and/or wherein the identification area (72) comprises a segment display and/or the identification area (72) comprises an attachment point at which an identification tag can be attached.

14. A method of clamping a part (28) to be clamped with a clamp (10), the method comprising the following steps:
a) providing the clamp (10) which has a base (12) and a clamping part (14) which is coupled to the base (12) which has an opening (20) for a movable clamping element (22), wherein the clamping part (14) is U-shaped in cross-section and has a connecting leg (54) with a guide opening (64) for guiding the clamping element (22) and a clamping leg (56) which provides a contact surface (70) for the part (28) to be clamped, the guide opening (64) being aligned with the opening (20);
b) positioning the part (28) to be clamped between the movable clamping element (22) of the clamp (10) and the clamping arm (56) of the clamp (10);
c) moving the clamping element (22) relative to the clamping part (14) and relative to the base (12) until the clamping element (22) contacts the part (28) to be clamped and presses it against the clamping leg (56) so that the contact surface (70) is at least partially pressed into the part (28) to be clamped,
**characterized in that**
when clamping the part (28) to be clamped, a coating of the part (28) to be clamped is automatically penetrated and an electrically conductive connection is established.

15. The method according to claim 14, **characterized in that** the coating is penetrated by the contact surface (70) of the clamping leg (56) and by the clamping element (22).

## Revendications

1. Pince (10) pour un support ou une feuillure, comprenant une base (12) et une partie de serrage (14) est couplée à la base (12) qui comporte une ouverture (20) pour un élément de serrage mobile (22), l'élément de serrage (14) étant réalisé en forme de U en coupe transversale et comportant une branche de liaison (54) ainsi qu'une branche de serrage (56), la branche de liaison (54) comportant une ouverture de guidage (64) pour guider l'élément de serrage (22) à l'intérieur de la pince (10), l'ouverture de guidage (64) étant alignée avec l'ouverture (20), et la branche de serrage (56) fournissant une surface d'appui (70) pour une pièce à serrer (28), **caractérisée en ce que** la pince (10) est conçue pour, lors du serrage d'une pièce à serrer (28), traverser automatiquement un revêtement de la pièce à serrer (28) et établir une connexion électriquement conductrice.

2. Borne (10) selon la revendication 1, **caractérisée en ce que** la patte de serrage (56) se trouve dans un premier plan et la surface d'appui (70) dans un deuxième plan, l'angle entre le premier plan et le deuxième plan étant différent de zéro.

3. Pince (10) selon la revendication 1 ou 2, **caractérisée en ce que** la surface d'appui (70) est élastique.

4. Pince (10) selon l'une des revendications précédentes, **caractérisée en ce que** la branche de serrage (56) présente un évidement (68) qui est adjacent à la surface d'appui (70).

5. Pince (10) selon l'une des revendications précédentes, **caractérisée en ce que** la surface d'appui (70) de la branche de serrage (56) est conçue pour pénétrer dans le revêtement de la pièce à serrer (28) pendant une opération de serrage et établir ainsi la connexion électriquement conductrice.

6. Pince (10) selon l'une des revendications précédentes, **caractérisée en ce que** la pince (10) comporte un élément de serrage mobile (22) qui est inséré dans l'ouverture (20), une liaison par serrage pouvant être établie entre la branche de serrage (56) de la partie de serrage (14) et l'élément de serrage mobile (22), l'ouverture (20) étant en particulier une ouverture filetée pour l'élément de serrage (22) conçu comme une vis de serrage.

7. Borne (10) selon la revendication 6, **caractérisée en ce que** l'élément de serrage (22) comporte une lame annulaire (26) qui est conçue pour traverser le revêtement de la pièce à serrer (28) et établir la connexion électriquement conductrice.

8. Pince (10) selon l'une des revendications précédentes, **caractérisée en ce que** la partie de serrage (14) est montée de manière à pouvoir coulisser par rapport à la base (12).

9. Pince (10) selon l'une des revendications précédentes, **caractérisée en ce que** la pince (10) comprend un dispositif de maintien de câble (30) qui est conçu pour maintenir au moins un câble (36).

10. Pince (10) selon l'une des revendications précédentes, **caractérisée en ce que** la base (12) présente, sur une surface de base, un deuxième orifice fileté (44) pour une vis de maintien (48) destinée à maintenir un câble (36).

11. Borne (10) selon la revendication 9 et la revendication 10, **caractérisée en ce que** le dispositif de retenue de câble (30) est prévu entre la vis de retenue (48) et la base (12).

12. Borne (10) selon l'une des revendications précédentes, **caractérisée en ce que** la base (12) comporte une zone d'identification (72).

13. Borne (10) selon la revendication 12, **caractérisée en ce que** la zone d'identification (72) comprend au moins un évidement (76) dans la base (12), dans lequel est inséré un élément d'identification séparé (78), et/ou dans lequel la zone d'identification (72) comprend un affichage segmenté et/ou la zone d'identification (72) comprend un emplacement de fixation auquel une étiquette d'identification peut être fixée.

14. Procédé pour serrer une pièce à serrer (28) à l'aide d'une pince (10), le procédé comprenant les étapes suivantes :
a) mise à disposition de la pince (10) qui comprend une base (12) et une partie de serrage (14) couplée à la base (12), qui présente une ouverture (20) pour un élément de serrage mobile (22), la partie de serrage (14) étant réalisée en forme de U en section transversale et comprenant une branche de raccordement (54) avec une ouverture de guidage (64) pour guider l'élément de serrage (22) et une branche de serrage (56) qui fournit une surface d'appui (70) pour la pièce à serrer (28), l'ouverture de guidage (64) étant alignée avec l'ouverture (20),
b) positionner la pièce à serrer (28) entre l'élément de serrage mobile (22) de la pince (10) et la branche de serrage (56) de la pince (10) ;
c) déplacer l'élément de serrage (22) par rapport à la partie de serrage (14) et par rapport à la base (12) jusqu'à ce que l'élément de serrage (22) entre en contact avec la pièce à serrer (28) et appuie contre la branche de serrage (56), de sorte que la surface d'appui (70) s'enfonce au moins partiellement dans la pièce à serrer (28),
**caractérisé en ce que**
lors du serrage de la pièce à serrer (28), un revêtement de la pièce à serrer (28) est automatiquement traversé et une connexion électriquement conductrice est établie.

15. Procédé selon la revendication 14, **caractérisé en ce que** le revêtement est traversé par la surface d'appui (70) de la branche de serrage (56) et par l'élément de serrage (22).
